# FASCICULE DE BREVET EUROPEEN

(11) **EP 0 891 496 B1**
(45) Date de publication et mention de la délivrance du brevet: **18.10.2000**
(21) Numéro de dépôt: 97908317.7
(22) Date de dépôt: 06.03.1997
(51) Int. Cl.: F16D 3/205

(54) **CROISILLON POUR JOINT DE TRANSMISSION ET JOINT DE TRANSMISSION CORRESPONDANT**
ÜBERTRAGUNGSGELENKKREUZ UND ENTSPRECHENDES ÜBERTRAGUNGSGELENK
CROSS-PIECE FOR UNIVERSAL JOINT AND UNIVERSAL JOINT

(30) Priorité: 10.04.1996 FR 9604474
(43) Date de publication de la demande: 20.01.1999
(73) Titulaire: GKN Automotive AG, 53797 Lohmar (DE)
(72) Inventeur: MOULINET, François, F-78510 Triel-sur-Seine (FR)
(74) Mandataire: Blot, Philippe Robert Emile
(86) Numéro de dépôt international: FR9700402
(87) Numéro de publication internationale: WO9738232

(56) Documents cités:
- DE-A- 4 331 474
- FR-A- 2 079 747
- FR-A- 2 198 576
- FR-A- 2 438 763

## Description

La présente invention concerne un croisillon pour joint de transmission, du type comprenant un corps central destiné à être relié à un arbre et sur lequel font saillie plusieurs bras, un galet monté rotatif et coulissant sur chaque bras par l'intermédiaire d'une couronne d'aiguilles et un organe de retenue de chaque galet sur son bras.

Dans les joints de transmission comprenant un croisillon de ce type, par exemple les joints homocinétiques à tripode utilisés dans des transmissions de véhicule automobile, les galets sont, après assemblage du joint, emprisonnés dans des pistes de l'élément femelle de ce joint. Par suite, si le joint est livré assemblé, les galets ne peuvent s'échapper de leurs bras.

En revanche, dans certains cas il est nécessaire de livrer séparément d'une part le croisillon équipé des galets et des aiguilles, et d'autre part l'élément femelle, l'assemblage s'effectuant sur une chaîne de montage du véhicule. Il est alors nécessaire de prévoir des moyens de retenue de chaque galet sur son bras.

En outre, on connaît dans l'état de la technique, notamment du document FR-A-2.198.576, un croisillon comportant des galets montés rotatifs et coulissants sur une couronne d'aiguilles. Les aiguilles sont maintenues autour du bras du croisillon par une bague comportant extérieurement un rebord périphérique de retenue positive du galet coulissant.

De plus, DE-43 31 474, qui découvrit le préambule de la revendication 1, décrit un croisillon comportant sur chaque bras un galet monté coulissant et rotatif par rapport au bras. Chaque galet est monté rotatif et fixe axialement sur un support de galet, ce dernier étant monté coulissant sur un bras du croisillon. Dans les divers modes de réalisation représentés, le support de galet n'est pas retenu sur le bras du croisillon, de sorte que le galet peut s'échapper si le joint est livré démonté.

L'invention a pour but de fournir des moyens de retenue particulièrement économiques et efficaces et que l'on puisse laisser en place après assemblage du joint sans qu'ils nuisent au bon fonctionnement de ce joint.

A cet effet, l'invention a pour objet un croisillon du type précité, caractérisé en ce que le bras comporte un chemin de roulement périphérique en creux dans lequel circulent les aiguilles, l'organe de retenue comportant une bague montée à l'extrémité du bras et espacée des aiguilles, laquelle bague comporte extérieurement sur au moins l'essentiel de sa périphérie un rebord de retenue positive du galet.

Le croisillon peut suivant l'invention comporter une ou plusieurs des caractéristiques suivantes :
- la bague est reçue partiellement dans une gorge ménagée sensiblement à l'extrémité du bras et espacée du chemin de roulement en creux ;
- le rebord de retenue est disposé à l'extrémité extérieure de la bague, laquelle bague a un diamètre extérieur courant inférieur au diamètre de l'alésage du galet ;
- la bague comporte intérieurement un bourrelet périphérique reçu dans ladite gorge, lequel bourrelet est décalé axialement dudit rebord de retenue ;
- ledit bourrelet est ménagé dans la partie intermédiaire de la bague ;
- la bague est annulaire et réalisée dans un matériau élastique, notamment une matière plastique élastique.
- la bague est élastique et fendue et est notamment un anneau métallique fendu.

L'invention a également pour objet un joint de transmission comprenant un croisillon tel que défini ci-dessus, et un élément femelle qui comporte des pistes dans lesquelles les galets sont reçus.

L'invention sera mieux comprise à la lecture de la description qui va suivre, donnée uniquement à titre d'exemple et faite en se référant aux dessins sur lesquels :
- la figure 1 est une vue en coupe partielle d'un croisillon conforme à l'invention ;
- la figure 2 est une vue à plus grande échelle d'un détail de la figure 1 montrant le débattement du galet coulissant ; et
- la figure 3 est une vue en coupe partielle montrant une variante de réalisation de la bague de retenue entrant dans la composition du croisillon selon l'invention.

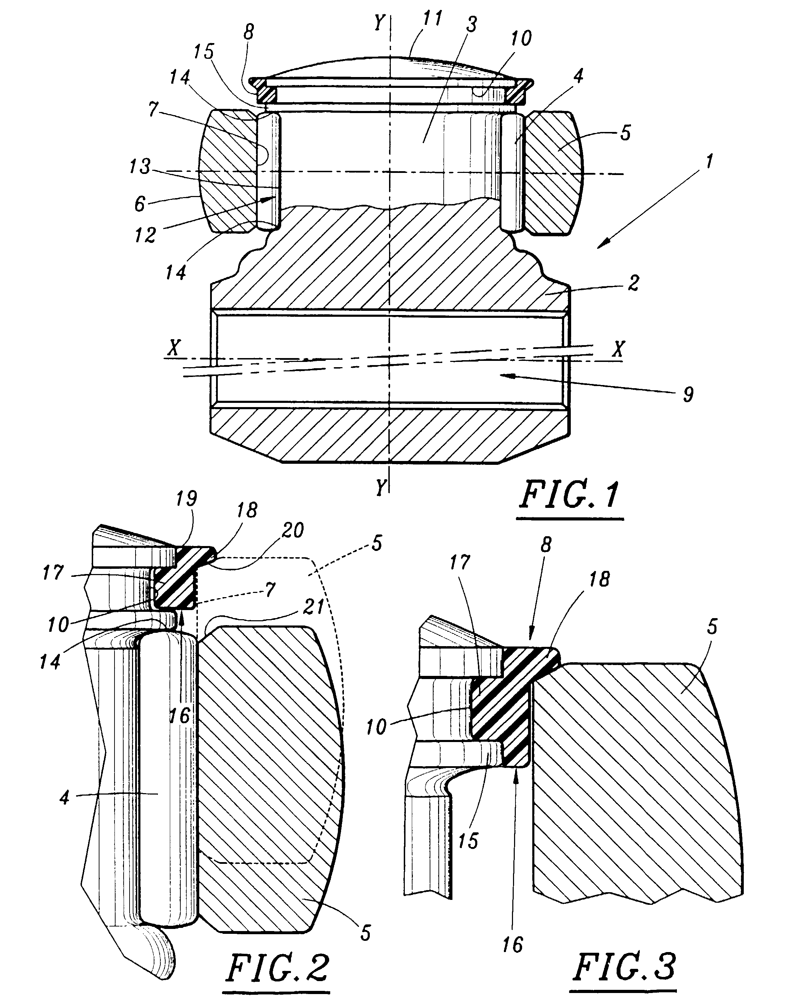

On a représenté sur la figure 1 un croisillon 1 de joint de transmission homocinétique du type tripode. Ce croisillon est constitué d'un corps central 2 annulaire d'axe X-X sur lequel font saillie radialement trois bras 3 d'axe Y-Y disposés angulairement à 120° les uns des autres ; et, sur chaque bras 3, d'une couronne d'aiguilles 4, d'un galet 5 ayant une surface extérieure sphérique 6 et un alésage cylindrique 7 et une bague 8 de retenue positive du galet sur son bras.

L'alésage central 9 du corps 2 est calé pour son montage sur un arbre de transmission non représenté. Chaque bras 3 comporte près de son extrémité libre une gorge circulaire 10 d'axe Y-Y qui sépare la partie principale ou courante du bras d'un chapeau d'extrémité 11 venu de matière, en forme de calotte sphérique. La partie courante du bras comporte un évidement ou plongée annulaire 12 d'axe Y-Y, de même longueur que les aiguilles 4, formant pour ces dernières un chemin de roulement périphérique en creux. Cet évidement 12 est délimité par un fond cylindrique 13 et par deux parois latérales d'extrémité 14. La paroi 14 extérieure est espacée de la gorge 10 et plus proche de l'axe X-X que celle-ci. Ainsi, une nervure périphérique 15 sépare la gorge 10 de l'évidement 12 formant chemin de roulement pour les aiguilles 4.

Les aiguilles 4 sont reçues partiellement dans l'évidement 12 et font saillie radialement par rapport au bras. Elles roulent à la fois sur le fond 13 de l'évidement 12 et dans l'alésage 7 des galets. Par conséquent, en l'absence des bagues 8, les galets pourraient s'échapper par coulissement vers l'extérieur des bras 3 qui les portent.

Pour éviter ceci, et donc permettre une manutention sûre du croisillon équipé des aiguilles et des galets, les bagues 8 assurent une retenue positive des galets sur leur bras avant le montage du croisillon dans l'élément femelle du joint, de la manière suivante.

La bague 8 représentée à plus grande échelle sur la figure 2 est réalisée dans une matière plastique élastique. Elle est annulaire et comporte un tronçon principal 16 ayant un diamètre extérieur courant légèrement inférieur au diamètre de l'alésage 7 du galet.

La bague 8 comporte en outre intérieurement à une extrémité un bourrelet 17 périphérique reçu dans la gorge 10 de retenue de la bague. Ce bourrelet présente une section analogue à celle de la gorge 10, assurant ainsi la retenue axiale de la bague sur le bras 3.

A son autre extrémité, la bague 8 comporte extérieurement sur au moins l'essentiel de sa périphérie un rebord 18 de retenue du galet. Ce rebord 18 est décalé axialement du bourrelet 17 vers l'extérieur du bras 3 sur le tronçon principal de la bague. Il est disposé à l'aplomb d'une surface cylindrique 19 du bras séparant la gorge 8 de la calotte sphérique du chapeau 11. Le tronçon principal 16 de la bague s'appuit intérieurement sur cette surface cylindrique 19.

Le rebord 18 présente en regard du galet 5 une surface chanfreinée 20 adaptée pour coopérer avec un chanfrein complémentaire 21 ménagé à l'extrémité de l'alésage cylindrique 7 du galet, lorsque ce galet est dans une position extrême à l'extérieur du bras 3. Dans cette position, représentée en traits pointillés sur la figure 2, l'alésage cylindrique 7 recouvre partiellement le tronçon principal 16 de la bague et le rebord 18 est reçu essentiellement dans l'espace délimité par le chanfrein 21 du galet. Ainsi le rebord 18 ne constitue pas un obstacle au déplacement libre du tripode dans l'élément femelle du joint. En particulier, la longueur radiale du rebord 18 est suffisamment limitée pour qu'il ne rentre pas en contact avec les chemins de roulement des galets ménagés dans l'élément femelle.

Afin d'assurer le montage d'un tel agencement, on monte tout d'abord la couronne d'aiguilles 4 et le galet 5, puis enfin la bague 8, qui est mise en place en se déformant élastiquement.

On comprend que la bague 8 assure par l'intermédiaire du rebord 18 une retenue positive du galet 5. Lorsque le galet est dans sa position extrême représenté en pointillés sur la figure 2, l'effort exercé par le galet sur la bague 8 provoque un appui de la surface extérieure du tronçon principal 16 sur la surface cylindrique 19, limitant ainsi les déformations de la bague et en particulier du rebord 18. Dans ces conditions, ce dernier est apte à assurer la retenue du galet.

De plus, l'effort exercé par le galet sur le rebord 18 et tendant à extraire le bourrelet 17 de la gorge 10 conduit à ce que la surface cylindrique extérieure du tronçon principal 16 s'applique sur la surface de l'alésage cylindrique 7 du galet. Aussi, le bourrelet 17 est maintenu par l'intermédiaire du galet 5 à l'intérieur de la gorge 10, évitant le démontage de la bague 8, malgré son élasticité.

Sur la figure 3 est représentée une variante de la bague 8. Dans ce mode de réalisation, le tronçon principal 16 de la bague se prolonge au-delà du bourrelet 17 à l'aplomb de la nervure périphérique 15. Dans ces conditions, le bourrelet 17 est disposé dans une partie intermédiaire de la bague 8.

Dans ce mode de réalisation, on comprend que la bague 8 s'appuie non seulement sur la surface cylindrique 19 mais également sur la nervure périphérique 15 par l'intermédiaire de la partie de prolongement du tronçon principal 16.

En variante, le rebord 18 est discontinu. Il s'étend toutefois sur l'essentiel de la périphérie de la bague.

Dans une variante de réalisation non représentée, la bague 8 est constituée d'un anneau métallique fendu, présentant une section sensiblement analogue à celles représentées aux figures. Cet anneau fendu présente une élasticité qui est suffisante pour permettre sa mise en place dans la gorge 10.

Le croisillon décrit ici comporte trois bras. Toutefois, l'invention concerne des croisillons quel que soit leur nombre de bras. En particulier, le croisillon peut comporter seulement deux bras ou quatre bras ou encore un nombre de bras supérieur.

Dans un croisillon selon l'invention, on comprend que les aiguilles 4 sont isolées dans un chemin de roulement périphérique en creux, et que la bague 8 formant l'organe de retenue du galet 5 est maintenue à l'écart des aiguilles 4. Ces dernières n'exercent donc aucune sollicitation sur la bague 8 visant au retrait de celle-ci. Ceci est rendu possible, puisque les aiguilles 8 sont retenues uniquement à chacune de leurs extrémités par les parois latérales 14.

La fonction de retenue des aiguilles n'étant pas assurée par la bague, il est possible que celle-ci soit réalisée dans un matériau élastique, ce qui permet sa retenue dans la gorge 10 sans recours à une pièce annexe de fixation.

## Revendications

1. Croisillon (1) pour joint de transmission, du type comprenant un corps central (2) destiné à être relié à un arbre et sur lequel font saillie plusieurs bras (3), un galet (5) monté rotatif et coulissant sur chaque bras (3) par l'intermédiaire d'une couronne d'aiguilles (4), et un organe (8) de retenue de chaque galet (5) sur son bras (3), caractérisé en ce que le bras (3) comporte un chemin de roulement (12) périphérique en creux dans lequel circulent les aiguilles (4), l'organe de retenue comportant une bague (8) montée à l'extrémité du bras (3) et espacée des aiguilles (4), laquelle bague (8) comporte extérieurement sur au moins l'essentiel de sa périphérie un rebord (18) de retenue positive du galet (5).

2. Croisillon selon la revendication 1, caractérisé en ce que la bague (8) est reçue partiellement dans une gorge (10) ménagée sensiblement à l'extrémité du bras (3) et espacée du chemin de roulement en creux (12).

3. Croisillon selon la revendication 1 ou 2, caractérisé en ce que le rebord (18) de retenue est disposé à l'extrémité extérieure de la bague (8), laquelle bague a un diamètre extérieur courant inférieur au diamètre de l'alésage (7) du galet (5).

4. Croisillon selon les revendications 2 et 3 prises ensemble, caractérisé en ce que la bague (8) comporte intérieurement un bourrelet périphérique (17) reçu dans ladite gorge (10), lequel bourrelet (17) est décalé axialement dudit rebord de retenue (18).

5. Croisillon selon la revendication 4, caractérisé en ce que ledit bourrelet (17) est ménagé dans la partie intermédiaire de la bague (8).

6. Croisillon selon l'une quelconque des revendications précédentes, caractérisé en ce que la bague (8) est annulaire et réalisée dans un matériau élastique, notamment une matière plastique élastique.

7. Croisillon selon l'une quelconque des revendications 1 à 5, caractérisé en ce que la bague (8) est élastique et fendue et est notamment un anneau métallique fendu.

8. Joint de transmission comprenant un croisillon suivant l'une quelconque des revendications 1 à 7, et un élément femelle qui comporte des pistes dans lesquelles les galets (20) sont reçus.

## Patentansprüche

1. Kreuzzapfen (1) für ein Antriebsgelenk, bestehend aus einem Mittelkörper (2), der dazu bestimmt ist, mit einer Welle verbunden zu werden und von dem mehrere Arme (3) vorspringen, einer Rolle (5), die drehbar und gleitend auf jedem Arm (3) mit Hilfe eines Nadelkranzes (4) montiert ist, und einem Element (8) zum Halten jeder Rolle (5) auf ihrem Arm (3), dadurch gekennzeichnet, dass der Arm (3) eine versenkte Umfangsrollbahn (12) umfaßt, in der die Nadeln (4) umlaufen, wobei das Halteelement einen Ring (8) umfaßt, der am Ende des Armes (3) montiert und in einem Abstand zu den Nadeln (4) angeordnet ist, welcher Ring (8) außen auf mindestens dem wesentlichen Teil seines Umfanges eine Leiste (18) zum sicheren Halten der Rolle (5) umfaßt.

2. Kreuzzapfen nach Anspruch 1,
dadurch gekennzeichnet, daß der Ring (8) teilweise in einer Nut (10) aufgenommen wird, die im wesentlichen am Ende des Armes (3) vorgesehen ist und in einem Abstand zu der versenkten Rollbahn (12) angeordnet ist.

3. Kreuzzapfen nach Anspruch 1 oder 2,
dadurch gekennzeichnet, daß die Halteleiste (18) am äußeren Ende des Ringes (8) angeordnet ist, wobei der Ring einen Außenlaufdurchmesser aufweist, der kleiner als der Durchmesser der Bohrung (7) der Rolle (5) ist.

4. Kreuzzapfen nach den Ansprüchen 2 und 3 gemeinsam, dadurch gekennzeichnet, daß der Ring (8) innen einen Umfangswulst (17) umfaßt, der in der Nut (10) aufgenommen wird, wobei der Wulst (17) axial zu der Halteleiste (18) versetzt ist.

5. Kreuzzapfen nach Anspruch 4, dadurch gekennzeichnet, daß der Wulst (17) in dem Zwischenteil des Ringes (8) vorgesehen ist.

6. Kreuzzapfen nach einem der vorhergehenden Ansprüche, dadurch gekennzeichnet, daß der Ring (8) ringförmig und aus einem elastischen Material, insbesondere einem elastischen Kunststoff, hergestellt ist.

7. Kreuzzapfen nach einem der Ansprüche 1 bis 5, dadurch gekennzeichnet, daß der Ring (8) elastisch und geschlitzt und insbesondere ein Metallsprengring ist.

8. Antriebsgelenk, umfassend einen Kreuzzapfen nach einem der Ansprüche 1 bis 7 und ein weibliches Element, das Laufflächen umfaßt, in denen die Rollen (20) aufgenommen werden.

## Claims

1. Spider (1) for a universal joint, of the type comprising a central body (2) intended to be connected to a shaft and from which several arms (3) project, a roller (5) mounted so that it can roll and slide on each arm (3) by means of a ring of needles (4), and a member (8) for retaininq each roller (5) on its arm (3), characterized in that the arm (3) includes a hollowed peripheral raceway (12) in which the needles (4) run, the retaining member including a collar (8) mounted at the end of the arm (3) and spaced away from the needles (4), which collar (8) has, on the outside, over at least most of its periphery, a rim (18) for positive retention of the roller (5).

2. Spider according to Claim 1, characterized in that the collar (8) is engaged partly in a groove (10) made substantially at the end of the arm (3) and spaced away from the hollowed raceway (12).

3. Spider according to Claim 1 or 2, characterized in that the retaining rim (18) lies at the outside end of the collar (8), which collar has a running outside diameter less than the diameter of the bore (7) of the roller (5).

4. Spider according to Claims 2 and 3 taken together, characterized in that the collar (8) includes, on the inside, a peripheral excrescence (17) engaged in the said groove (10), which excrescence (17) is axially offset with respect to the said retaining rim (18).

5. Spider according to Claim 4, characterized in that the said excrescence (17) is made in the intermediate part of the collar (8).

6. Spider according to any one of the preceding claims, characterized in that the collar (8) is annular and made of a springy material, in particular a springy plastic.

7. Spider according to any one of Claims 1 to 5, characterized in that the collar (8) is springy and split, and is in particular a split metal ring.

8. Universal joint comprising a spider according to any one of Claims 1 to 7 and a female element which includes tracks in which the rollers (20) are engaged.
